# EUROPEAN PATENT SPECIFICATION

(11) **EP 4 254 778 B1**
(45) Date of publication and mention of the grant of the patent: **22.07.2026**
(21) Application number: 23153515.4
(22) Date of filing: 26.01.2023
(51) Int. Cl.: H02P 27/08, H02P 21/00

(54) **OPERATION CONTROL SYSTEM AND AIR CONDITIONER, OPERATION CONTROL METHOD, AND OPERATION CONTROL PROGRAM**
BETRIEBSSTEUERUNGSSYSTEM UND KLIMAANLAGE, BETRIEBSSTEUERUNGSVERFAHREN UND BETRIEBSSTEUERUNGSPROGRAMM
SYSTÈME DE COMMANDE DE FONCTIONNEMENT ET CLIMATISEUR, PROCÉDÉ DE COMMANDE DE FONCTIONNEMENT ET PROGRAMME DE COMMANDE DE FONCTIONNEMENT

(30) Priority: 29.03.2022 JP 2022053762
(43) Date of publication of application: 04.10.2023
(73) Proprietor: Mitsubishi Heavy Industries Thermal Systems, Ltd., Tokyo, 100-8332 (JP)
(72) Inventor: YOSHIDA, Junichi, Tokyo, 100-8332 (JP); SUNOHARA, Tetsu, Tokyo, 100-8332 (JP); SHIMIZU, Kenji, Tokyo, 100-8332 (JP); SERIZAWA, Kazuhiko, Tokyo, 100-8332 (JP); SUMITO, Kiyotaka, Tokyo, 100-8332 (JP)
(74) Representative: Cabinet Beau de Loménie

(56) References cited:
- EP-A1- 3 379 718
- WO-A1-2015/072173
- CN-A- 101 277 089
- JP-A- 2019 004 616
- JP-A- 2019 004 617

## Description

### Technical Field

The present disclosure relates to an operation control system and an air conditioner, an operation control method, and an operation control program.

### Background Art

An air conditioner is primarily equipped with an inverter device that generates AC power for load (motor) drive to freely drive a motor of a compressor. An inverter device is well-known, which converts a three-phase AC voltage input from a commercial power supply (e.g., AC 200 V three-phase AC power supply) into a DC voltage once through a rectifier circuit (converter), and then converts the DC power into desired AC power for motor drive by the inverter device. Such inverter devices, those that perform output control by the v/f control method and those that perform output control by the vector control method are known.

In Patent Document 1, in order to reduce switching loss in the inverter device, a PWM-controlled pulse signal is stopped for a certain period (mask period) (partial two-phase current control). Partial two-phase current control is also disclosed in Patent Documents 2 and 3, whereas Patent Document 2 discloses the features of the preamble of claims 1, 8 and 11.

Patent Document 3 discloses a control device for an air conditioner including a voltage command unit that stops a PWM control signal outputted to an inverter main circuit when a voltage command becomes zero in a mask period.

Patent Document 4 discloses a method of controlling a three-phase AC motor, the method involving supplying current to two phases of the three-phase AC motor.

### Citation List

### Patent Literature

Patent Document 1: JP 2018-164347 A
Patent Document 2: JP 2019-4616 A
Patent Document 3: JP 2019-4617 A
Patent Document 4: WO 2015/072173 A1

### Summary of Invention

### Technical Problem

While partial two-phase current control can reduce switching losses, step-out due to insufficient torque and vibration and noise due to waveform distortion may occur.

In view of these circumstances, the object of the present invention is to provide an operation control system and an air conditioner, an operation control method, and an operation control program, which can improve operation stability.

### Solution to Problem

A first aspect of the present invention is an operation control system, which includes:
a field weakening determination unit configured to determine whether field weakening control is off for a three-phase AC motor; and
an execution unit configured to perform partial two-phase current control in a case where the field weakening control is determined to be off,
in which
in sine wave voltage commands vu*, vv*, vw* individually corresponding to individual phases generated on the basis of a speed command for the three-phase AC motor, assuming that a mask period is a predetermined angular range including an electrical angle at which the amplitude of the voltage command becomes zero, the partial two-phase current control is a control to stop pulse generation during the mask period in a case where a pulse-width modulation signal is generated based on the voltage command, and
the execution unit stops the partial two-phase current control in a case where the field weakening control is determined to be on.

The present invention is defined by the independent claims 1, 8 and 11. Preferred embodiments are defined by the dependent claims 2-7, 9, 10, 12 and 13.

### Advantageous Effects of Invention

According to the present invention, an effect that operation stability can be improved is achieved.

### Brief Description of Drawings

FIG. 1 is an overall view of an inverter device according to a first embodiment of the present disclosure.
FIG. 2 is a diagram illustrating a functional configuration of a control device according to the first embodiment of the present disclosure.
FIG. 3 is a diagram illustrating an example of a waveform according to the first embodiment of the present disclosure.
FIG. 4 is a functional block diagram illustrating functions provided by a switching unit according to the first embodiment of the present disclosure.
FIG. 5 is a flowchart illustrating an example of a procedure for switching processing according to the first embodiment of the present disclosure.
FIG. 6 is a flowchart illustrating an example of a procedure for switching processing according to the first embodiment of the present disclosure.
FIG. 7 is a diagram illustrating an example of a hardware configuration of the control device according to the first embodiment of the present disclosure.
FIG. 8 is a functional block diagram illustrating functions provided by a switching unit according to a second embodiment of the present disclosure.
FIG. 9 is a flowchart illustrating an example of a procedure for switching processing when an internal command according to the second embodiment of the present disclosure is detected.
FIG. 10 is a flowchart illustrating an example of a procedure for switching processing when an external command according to the second embodiment of the present disclosure is detected.

### Description of Embodiments

### First Embodiment

Hereinafter, a first embodiment of an operation control system and an air conditioner, an operation control method, and an operation control program, according to the present disclosure, will be described with reference to the drawings.

### Circuit Configuration of Inverter Device

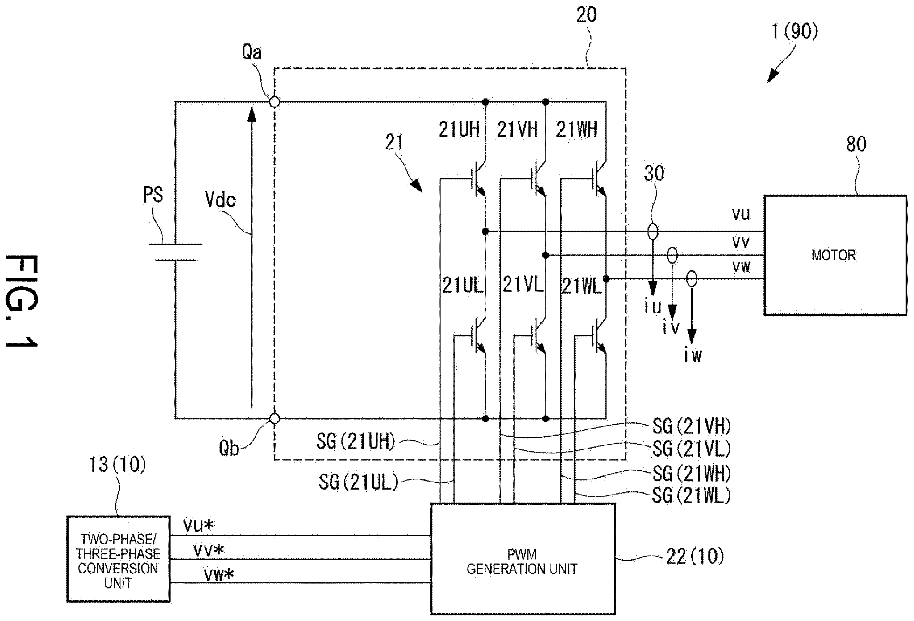

FIG. 1 is a diagram illustrating a circuit configuration of an inverter device according to an embodiment.

An inverter device 1 is installed in an outdoor unit of an air conditioner 90. The inverter device 1 outputs, to a three-phase AC motor (motor 80) for driving the compressor of the above-described outdoor unit, an AC voltage (three-phase AC voltage) for load driving according to a separately input speed command. Although a three-phase AC motor is illustrated and described in the present embodiment, a wide range of AC motors can be applied. The inverter device 1 rotationally drives the three-phase AC motor (motor 80), that is, the load at a desired rotational speed on the basis of the AC voltage for load driving.

The inverter device 1 includes a control device 10, an inverter main circuit 20, and a motor current detecting unit 30.

The inverter device 1 converts a DC voltage Vdc supplied by a DC power supply PS into a three-phase AC voltage consisting of a U-phase AC voltage, a V-phase AC voltage, and a W-phase AC voltage, which are AC voltages for load driving to rotationally drive the motor 80.

The motor current detecting unit 30 is provided on each of the wiring lines for the three phases connected from the inverter device 1 to the motor 80. The motor current detecting unit 30 detects currents iu, iv, and iw of the U-phase, the V-phase, and the W-phase flowing through the motor 80 in relation to the three-phase applied voltage (AC voltage vu, vv, vw) output from the inverter device 1 to the motor 80, respectively, and notifies the control device 10 of the detection result of each current iu, iv, and iw.

### Inverter Main Circuit

The inverter main circuit 20 includes a switching element group 21, a positive electrode DC terminal Qa, and a negative electrode DC terminal Qb.

The positive electrode DC terminal Qa and the negative electrode DC terminal Qb are terminals to which the DC voltage Vdc is input.

The positive electrode DC terminal Qa and the negative electrode DC terminal Qb are connected to the positive and negative electrodes of the DC power supply PS, respectively.

The switching element group 21 includes three pairs of two switching elements connected in series between the DC voltage Vdc. The switching element is, for example, a power transistor such as an Insulated Gate Bipolar Transistor (IGBT). Each pair of the above series-connected switching elements is provided corresponding to each of the three phases for rotationally driving the three-phase AC motor (motor 80).

As illustrated in FIG. 1, the switching element group 21 includes a pair of an upper arm switching element 21UH and a lower arm switching element 21UL connected in series, from the positive electrode DC terminal Qa to the negative electrode DC terminal Qb into which DC voltage Vdc is input.

Furthermore, the switching element group 21 includes a pair of an upper arm switching element 21VH and a lower arm switching element 21VL connected in series from the positive electrode DC terminal Qa to the negative electrode DC terminal Qb.

Furthermore, the switching element group 21 includes a pair of an upper arm switching element 21WH and a lower arm switching element 21WL connected in series from the positive electrode DC terminal Qa to the negative electrode DC terminal Qb.

The pair of the upper arm switching element 21UH and the lower arm switching element 21UL are switched by a gate signal from a PWM generation unit 22 (described later) to generate an AC voltage vu in a U-phase. The pair of the upper arm switching element 21UH and the lower arm switching element 21UL are alternately switched in a region excluding a peak voltage region RGP and a zero voltage region RGZ.

Similarly, the pair of the upper arm switching element 21VH and the lower arm switching element 21VL are switched by the gate signal from the PWM generation unit 22 to generate an AC voltage vv in a V-phase. The pair of the upper arm switching element 21VH and the lower arm switching element 21VL are alternately switched in the region excluding the peak voltage region RGP and the zero voltage region RGZ.

Similarly, the pair of the upper arm switching element 21WH and the lower arm switching element 21WL are switched by the gate signal from the PWM generation unit 22 to generate an AC voltage vw in a W-phase. The pair of the upper arm switching element 21WH and the lower arm switching element 21WL are alternately switched in the region excluding the peak voltage region RGP and the zero voltage region RGZ.

The PWM generation unit 22 generates a gate signal (PWM signal) to drive the switching element group 21 and turn the switching element group 21 on and off, in relation to a command (described later) received from a two-phase/three-phase conversion unit 13, which is provided in the control device 10.

In the present embodiment, the PWM generation unit 22 acquires AC voltage commands vu*, vv*, vw*. The PWM generation unit 22 generates a PWM-controlled pulse signal (hereinafter also referred to as "PWM signal") with a duty rate proportional to the voltage of each waveform at each timing of the acquired AC voltage commands vu*, vv* and vw*.

Specifically, the PWM generation unit 22 outputs a gate signal SG (21UH), a gate signal SG (21UL), a gate signal SG (21VH), a gate signal SG (21VL), a gate signal SG (21WH), and a gate signal SG (21WL) to the gates of the switching element 21UH, the switching element 21UL, the switching element 21VH, the switching element 21VL, the switching element 21WH, and the switching element 21WL, respectively, which will be described later.

The PWM generation unit 22 generates the gate signal SG (21UH) and the gate signal SG (21UL) on the basis of the AC voltage command vu*.

Similarly, the PWM generation unit 22 generates the gate signal SG (21VH) and the gate signal SG (21VL) on the basis of the AC voltage command vv*.

Similarly, the PWM generation unit 22 generates the gate signal SG (21WH) and the gate signal SG (21WL) on the basis of the AC voltage command vw*.

### Control Device

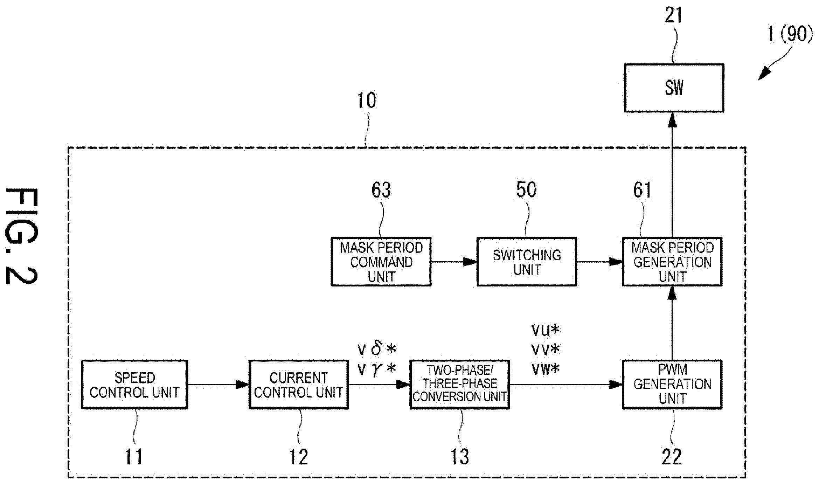

As illustrated in FIG. 2, the control device 10 is functionally provided with a speed control unit 11, a current control unit 12, the two-phase/three-phase conversion unit 13, the PWM generation unit 22, and a mask period command unit 63.

In the present embodiment, a computer system functions as the control device 10 by executing a program described later.

The speed control unit 11 outputs a speed command for rotating the motor 80 at a desired rotational speed ω.

The current control unit 12 receives input of a speed command from the speed control unit 11 and generates voltage commands on two axes (delta and gamma axes) of a rotating rectangular coordinate system on the basis of the current iu, iv, and iw detected at the motor current detecting unit 30. For example, the current control unit 12 generates and outputs a δ axis voltage command and a γ axis voltage command as voltage commands.

The two-phase/three-phase conversion unit 13 performs coordinate conversion on the voltage command output from the current control unit 12 to AC voltage commands vu*, vv*, and vw* corresponding to each of the AC voltages of the three phases. In this way, with the current control unit 12 and the two-phase/three-phase conversion unit 13, a (similar) sine wave corresponding to each of the desired three-phase AC is output, and sine wave voltage commands are generated based on the speed command of the AC motor.

Thus, when the voltage command is acquired, a PWM signal is generated at the PWM generation unit 22 by comparing the voltage command with the voltage waveform of a reference triangular wave (or saw-shaped wave). When the PWM signal is generated on the basis of the voltage command of the desired sine wave, it can be used without being limited to the above configuration.

Note that when the AC voltage commands vu*, vv*, and vw* are each sine waves and the inverter device 1 performs PWM control with no change to the sine waves, switching loss in the switching element group 21 may be large. Thus, it is preferable to perform two-arm type control. The two-arm type control is a control of turning on each switching element for a predetermined period of time. Specifically, in a large region (peak voltage region RGP) of (the absolute value of) each phase voltage of the three-phase AC voltage, the upper arm switching elements 21UH, 21VH, 21WH, and the lower arm switching elements 21UL, 21VL, 21WL are turned on (continuously-on) over all the multi-period regions of the PWM period.

### Pulse Signal Stop Control

The control device 10 includes the mask period command unit 63 in order to reduce switching losses. The mask period (zero voltage region RGZ) is a period when the duty cycle is 0% (continuously-off) and all regions in the period have an off-signal (no pulse). In other words, PWM signals are stopped during the mask period. The mask period is set as a predetermined angular range that includes an electrical angle at which the amplitude in the voltage commands (AC voltage commands vu*, vv*, vw*) is zero. The angular range is, for example, 60 degrees. The mask period command unit 63 corrects the PWM signal such that the mask period is formed in a preset angular range. Specifically, the mask period command unit 63 outputs a command to a mask period generation unit 61 to correct the PWM signal generated at the PWM generation unit 22.

The formation method of the mask period is not limited to the above method provided that the mask period can be formed.

Multiple pulses during the mask period are removed by the mask period command unit 63. This suppresses switching losses. For example, in the U-phase, the current iu is kept in a state of substantially not flowing in all regions during the mask period. On the other hand, because the other phases are deviated from each other, the current iv of the V-phase and the current iw of the W-phase flow even during the mask period of the U-phase. That is, since the currents in these two phases partially flow, control that stops the current of a specific phase using a mask period (while currents in the other two phases flow) is called partial two-phase current control. In other words, the partial two-phase current control is a control of, when generating PWM signals on the basis of the voltage commands vu*, vv*, and vw*, stopping the pulse of any one phase during the mask period.

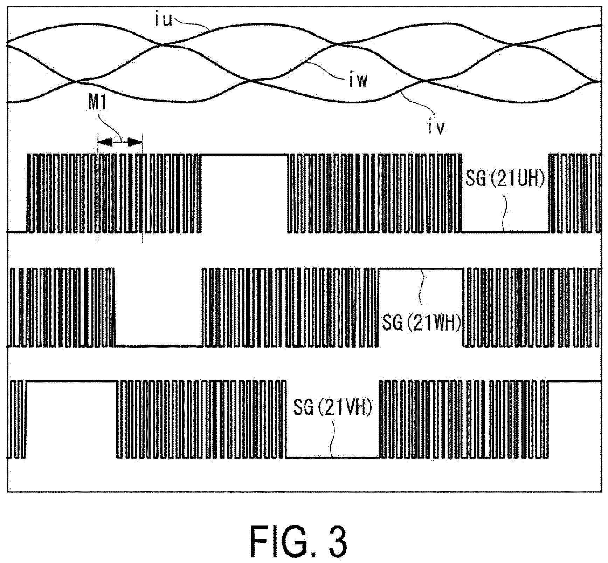

FIG. 3 illustrates an example of a waveform with no mask period. In FIG. 3, for example, the period M1 is a mask period, and the mask period is generated by the mask period generation unit 61 in response to a command from the mask period command unit 63. During the mask period, the pulses in the period M1 in FIG. 3 become zero.

When the voltage commands vu*, vv*, and vw* are input to the PWM generation unit 22, the PWM signals are generated before the partial two-phase current control is applied (i.e., during the mask period), and the mask period is generated by the mask period command unit 63.

### Switching Control in Partial Two-phase Current Control

A control device (operation control system) 10 controls switching related to PWM control. Thus, the control device 10 is provided with a switching unit 50. In performing PWM control on the basis of a voltage command, the switching unit 50 switches between performing and not performing the partial two-phase current control. That is, the switching unit 50 switches between outputting the command from the mask period command unit 63 to the mask period generation unit 61 and not outputting the command from the mask period command unit 63 to the mask period generation unit 61 according to a predetermined condition. When the command from the mask period command unit 63 is not output to the mask period generation unit 61, the mask period generation unit 61 does not correct the output of the PWM generation unit 22 (does not generate the mask period).

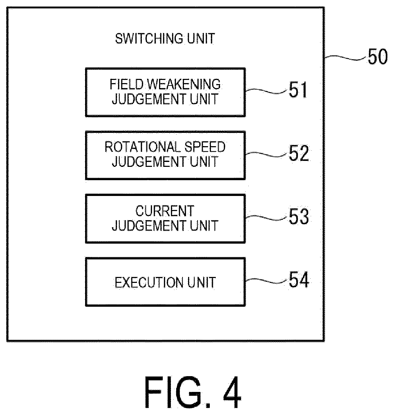

FIG. 4 is a functional block diagram illustrating functions provided by the switching unit 50. The switching unit 50 includes a field weakening determination unit 51 (field weakening judgement unit), a rotational speed determination unit 52 (rotational speed judgement unit), a current determination unit 53 (current judgement unit), and an execution unit 54.

The field weakening determination unit 51 judges whether field weakening control is performed for the motor 80. The field weakening control is a control of weakening the field and increasing the rotational speed. The specific control method and configuration of the field weakening control is not limited, and various methods can be used. The field weakening control is performed, for example, at high rotation speed and a high load. Alternatively, the field weakening control may be controlled to start and end according to a command voltage. The command voltage is a threshold value (start voltage and end voltage) of the field weakening control. When the voltage intended to be output to the motor 80 (the voltage intended to be output from the inverter) becomes approximately equal to the inverter voltage (the actual voltage value), field weakening control is performed. The field weakening control is controlled to start and end by, for example, a control system of an air conditioner. For example, when the field weakening control is executed, a field weakening flag used in the processing is 1 (or 0 when not executed), and the field weakening determination unit 51 determines whether the field weakening control is on based on the field weakening flag. The determination method is not limited to the above method provided that it is possible to determine whether field weakening control is on in the air conditioner.

The rotational speed determination unit 52 determines whether the rotational speed of a compressor (three-phase AC motor) provided in the air conditioner is less than or equal to a predetermined value. A measured value is preferably used as the rotational speed. The predetermined value is set to an upper limit value of the rotational speed that is assumed to be stable under, for example, an intermediate condition of a cooling operation (cooling intermediate) or an intermediate condition of a heating operation. In air conditioners, the rotational speed of the compressor is high immediately after start of operation because of the wide range of difference between an actual temperature and a target temperature. When the temperature approaches the target temperature, the rotational speed of the compressor becomes low. Since the rotational speed of the compressor varies in this way, the rotational speed determination unit 52 can determine that the rotational speed of the compressor is not high by setting the predetermined value as an upper limit value at which it can be determined that the compressor is in the intermediate condition. The predetermined value is set in a low-speed range, for example, from 20 rps to 50 rps. Thus, the rotational speed determination unit 52 detects that the compressor is rotating at a low (or medium) speed.

The current determination unit 53 determines whether a current value flowing through the motor 80 is less than or equal to a predetermined value. The current value varies with a load condition. The current determination unit 53 detects a low load condition (or a medium load condition) because there is a risk of step-out or the like when the partial two-phase current control is executed under a high load condition. A measured value is used as the current value. Since the current supplied to the motor 80 is AC, an effective value is preferably used. The predetermined value is set in advance as a current value of a load state in which step-out or the like is permitted, on the basis of the relationship between the load state and the occurrence of step-out or the like.

An execution unit 54 switches between applying and not applying the partial two-phase current control to the PWM control. Specifically, the execution unit 54 switches between outputting the command from the mask period command unit 63 to the mask period generation unit 61 and not outputting the command from the mask period command unit 63 to the mask period generation unit 61. In a case where the command from the mask period command unit 63 is not output to the mask period generation unit 61, for example, a signal indicating that the partial two-phase current control is not performed is output to the mask period generation unit 61. In this case, the mask period generation unit 61 does not correct the output of the PWM generation unit 22 (does not generate a mask period). That is, the mask period generation unit 61 outputs the output of the PWM generation unit 22 to the switching element group 21 without change.

Thus, in a case where the PWM control is executed, the execution unit 54 switches between applying the partial two-phase current control and not applying the partial two-phase current control. In a case where the partial two-phase current control is applied, based on the AC voltage commands vu*, vv* and vw*, PWM pulses are output from the PWM generation unit 22 and a mask period is generated by the mask period generation unit 61. In a case where the partial two-phase current control is not applied, based on the AC voltage commands vu*, vv* and vw*, PWM pulses (with no mask period) are output from the PWM generation unit 22 and the PWM signals are formed without correction by the mask period generation unit 61. In addition, at the execution unit, continuously-on control may be switched in the same way.

The execution unit 54 executes switching on the basis of the determination result of each determination unit. More specifically, the execution unit 54 performs the partial two-phase current control in a case where the field weakening control is determined to be off (positive determination by the field weakening determination unit 51), the rotational speed is determined to be less than or equal to a predetermined value (positive determination by the rotational speed determination unit 52), and the current value is determined to be less than or equal to a predetermined value (positive determination by the current determination unit 53).

That is, the execution unit 54 stops the partial two-phase current control in a case where any one of the following conditions is met: the field weakening is determined to be on, the rotational speed is determined to be not less than or equal to the predetermined value, and the current value is determined to be not less than or equal to the predetermined value.

Additionally, the partial two-phase current control may be executed in a case where the field weakening control is determined to be off. In this case, the execution unit 54 stops the partial two-phase current control in a case where the field weakening control is determined to be on.

### Flow of Switching Control

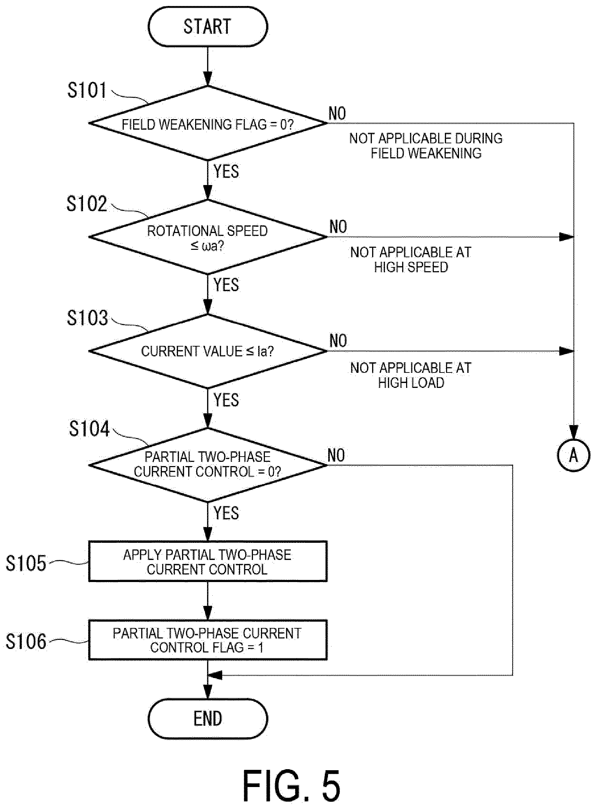

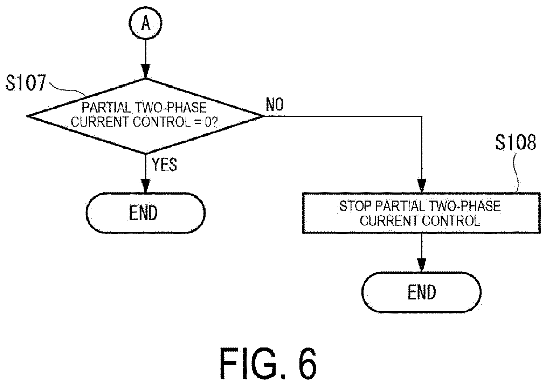

Next, an example of the switching processing described above will be described with reference to FIGS. 5 and 6. FIGS. 5 and 6 are flowcharts illustrating an example of a procedure for switching processing according to the present embodiment. The flow illustrated in FIGS. 5 and 6 is executed repeatedly at a predetermined control cycle, for example, when the air conditioner is in operation.

First, it is determined whether the field weakening control is off (S101). That is, it is determined whether the field weakening flag is zero. In a case where the field weakening control is off (YES determination in S101), it is determined whether the rotational speed is less than or equal to a predetermined value (ω a in FIG. 5) (S102). In a case where the rotational speed is less than or equal to the predetermined value (YES determination in S102), it is determined whether the current value is less than or equal to a predetermined value (Ia in FIG. 5) (S103).

In a case where the current value is less than or equal to the predetermined value (YES determination in S103), it is determined whether the partial two-phase current control is off (S104). That is, it is determined whether the flag of the partial two-phase current control is zero. In a case where the partial two-phase current control is on (NO determination in S104), the process is terminated.

In a case where the partial two-phase current control is off (YES determination in S104), the partial two-phase current control is applied (S105). In a case where the partial two-phase current control is applied, the partial two-phase current control can actually be set to the execution state (the flag of the partial two-phase current control becomes 1) (S106), and the flow is terminated.

In a case where the field weakening control is on (NO determination in S101), since the field weakening control is on, the processing moves to S107 so as not to perform the partial two-phase current control. In a case where the rotational speed is not less than or equal to the predetermined value (NO determination in S102), since the operation is performed in a high rotation region, the processing moves to S107 so as not to perform the partial two-phase current control. In a case where the current value is not less than or equal to the predetermined value (NO determination in S103), since the operation is performed under a high load condition, the processing moves to S107 so as not to perform the partial two-phase current control.

In S107, it is determined whether the partial two-phase current control is off. That is, it is determined whether the flag of the partial two-phase current control is zero. In a case where the partial two-phase current control is off (YES determination in S107), the processing is terminated. In a case where the partial two-phase current control is on (NO determination in S107), the partial two-phase current control is stopped (S108) and the processing is terminated.

In the PWM control, this flow switches between performing and not performing the partial two-phase current control. In a situation where it is assumed that step-out, vibration, or noise is likely to occur (in the case of a negative determination in each determination processing), the occurrence of step-out or the like can be suppressed by control that prevents the partial two-phase current control from being performed. On the other hand, in a situation where it is assumed that step-out or the like is unlikely to occur, the partial two-phase current control can be performed. As a result, switching losses can be reduced and effective application of the partial two-phase current control can be achieved.

### Hardware Configuration Diagram of Control Device

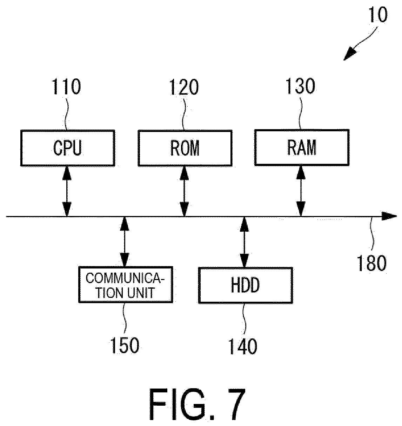

FIG. 7 is a diagram illustrating an example of a hardware configuration of the control device 10 according to the present embodiment.

As illustrated in FIG. 7, the control device 10 is a computer system (calculator system) including, for example, a CPU 110, a read-only memory (ROM) 120 for storing programs or the like executed by the CPU 110, a random-access memory (RAM) 130 that functions as a work area when executing each program, a hard disk drive (HDD) 140 serving as a mass storage device, and a communication unit 150 for connecting to a network or the like. A solid-state drive (SSD) may be used as the mass storage device. These components are connected via bus 180.

The control device 10 may also include an input unit consisting of a keyboard, a mouse, or the like, and a display unit consisting of a liquid crystal display device or the like for displaying data.

Note that the storage medium for storing programs or the like executed by the CPU 110 is not limited to the ROM 120. For example, the storage medium may be another auxiliary storage device such as a magnetic disk, a magneto-optical disk, or a semiconductor memory.

A series of processing steps to achieve the various functions described above are recorded in the hard disk drive 140 or the like in the form of a program, which is read by the CPU 110 into a RAM 130 or the like to process and compute the information. As a result, the various functions described above are achieved. The program may be pre-installed in the ROM 120 or another storage media, stored and provided in a computer-readable storage medium, or delivered via wired or wireless communication means. The computer-readable storage medium includes a magnetic disk, a magneto-optical disk, a CD-ROM, a DVD-ROM, and a semiconductor memory.

As described above, with the operation control system and the air conditioner, the operation control method, and the operation control program according to the present embodiment, although step-out, vibration, and noise may occur when partial two-phase current control is performed, such step-out, vibration, and noise can be suppressed by performing the partial two-phase current control under the condition that field weakening control is not performed.

### Second Embodiment

Next, an operation control system and an air conditioner, an operation control method, and an operation control program according to a second embodiment of the present disclosure are described.

In the present embodiment, switching control when there is an interrupt command will be described. Hereinafter, the operation control system and the air conditioner, the operation control method, and the operation control program according to the present embodiment will be described focusing on differences from the first embodiment.

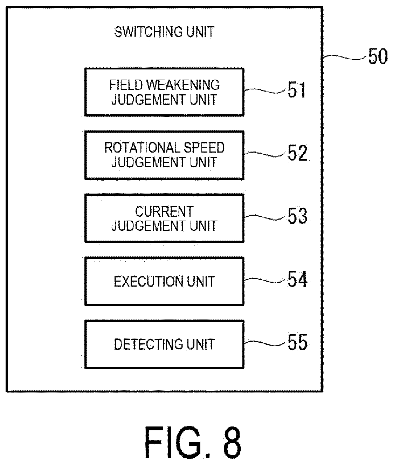

As illustrated in FIG. 8, the switching unit 50 includes a detecting unit 55.

The detecting unit 55 detects at least one of an internal command and an external command. The internal command is a control command generated by internal processing of an air conditioner (provided with the motor 80). Specifically, the internal command is a command that is automatically generated by various processes inside the air conditioner (not based on a command from the outside). The detecting unit 55 detects, as the internal command, at least one of a command to start the field weakening control, a command to change the rotational speed of the compressor, and a command to change the current value of the motor 80. The start command to start the field weakening control is a command generated before the field weakening is started. The command to change the rotational speed of the compressor is a command generated before changing the rotational speed, in particular, a command to increase the rotational speed. The command to change the current value is a command generated before changing the current value, in particular, a command to increase the current value.

The external command is a command input from outside the air conditioner (provided with the motor 80). Specifically, the external command is a control command generated by a command input from outside the air conditioner (e.g., a remote control). The detecting unit 55 detects, as the external command, at least one of a command to start the field weakening control, a command to change the rotational speed of the compressor, and a command to change the current value of the motor 80.

That is, the detecting unit 55 detects in advance, in response to the internal command or the external command, that the operating state of the air conditioner is a state in which step-out or the like is likely to occur due to the partial two-phase current control.

In a case where the detecting unit 55 detects the internal command or the external command, the execution unit 54 stops the partial two-phase current control.

### Flow of Switching Control

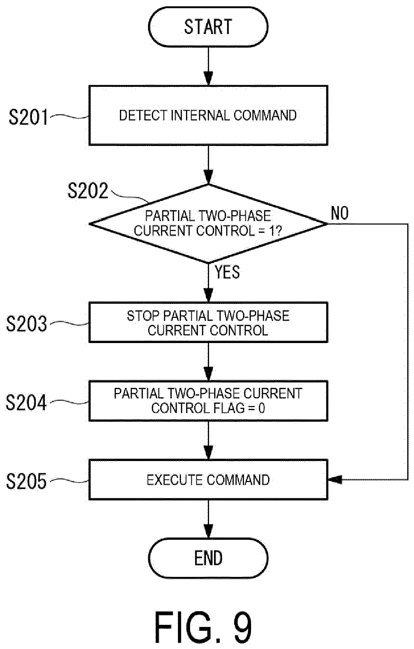

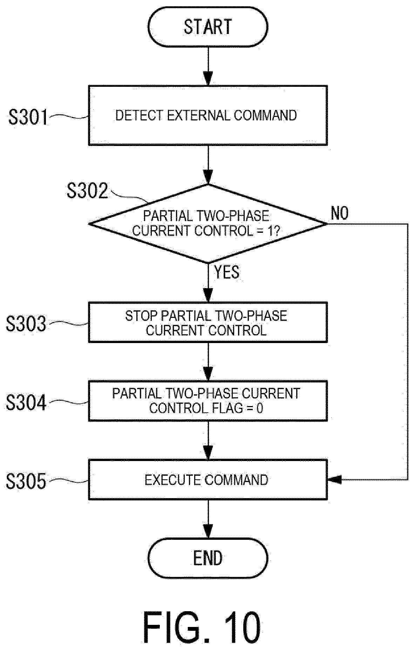

Next, an example of the switching processing described above will be described with reference to FIGS. 9 and 10. FIG. 9 is a flowchart illustrating an example of a procedure for switching processing when the internal command according to the present embodiment is detected. FIG. 10 is a flowchart illustrating an example of a procedure for switching processing when the external command according to the present embodiment is detected. The flow illustrated in FIGS. 9 and 10 is executed repeatedly at a predetermined control cycle, for example, when the air conditioner is in operation.

The switching processing when an internal command is detected will be described with reference to FIG. 9.

First, the internal command is detected (S201). Next, it is determined whether the partial two-phase current control is on (S202). That is, it is determined whether the flag of the partial two-phase current control is 1. In a case where the partial two-phase current control is on (YES determination in S202), the partial two-phase current control is stopped (S203). Then, when the partial two-phase current control flag becomes 0 and the partial two-phase current control is actually stopped (S204), the internal command received in S201 is executed (S205).

In a case where the partial two-phase current control is off (NO determination in S202), the internal command received in S201 is executed (S205).

In this manner, when the internal command is detected, the partial two-phase current control is stopped before the internal command is executed. Thus, when it is detected that the operating state of the air conditioner is a state in which step-out or the like is likely to occur due to the partial two-phase current control, the partial two-phase current control can be stopped before the internal command is executed to suppress the occurrence of step-out or the like.

The switching processing when an external command is detected will be described with reference to FIG. 10.

First, the external command is detected (S301). Next, it is determined whether the partial two-phase current control is on (S302). That is, it is determined whether the flag of the partial two-phase current control is 1. In a case where the partial two-phase current control is on (YES determination in S302), the stop of the partial two-phase current control is applied (S303). Then, when the partial two-phase current control flag becomes 0 and the partial two-phase current control is actually stopped (S304), the external command received in S301 is executed (S305).

In a case where the partial two-phase current control is off (NO determination in S302), the external command received in S301 is executed (S305).

In this manner, when the external command is detected, the partial two-phase current control is stopped before the external command is executed. Thus, when it is detected that the operating state of the air conditioner is a state in which step-out or the like is likely to occur due the partial two-phase current control, the partial two-phase current control can be stopped before execution of the external command to suppress the occurrence of step-out or the like.

As described above, with the operation control system and the air conditioner, the operation control method, and the operation control program according to the present embodiment, the partial two-phase current control can be stopped when a state in which step-out, vibration, and noise is likely to occur is assumed while the partial two-phase current control is performed.

For example, the respective embodiments are applied to an air conditioner, but the respective embodiments can be similarly applied to any device in which partial two-phase current control is performed.

### Reference Signs List

1 Inverter device
10 Control device (operation control system)
11 Speed control unit
12 Current control unit
13 Two-phase/three-phase conversion unit
20 Inverter main circuit
21 Switching element group
22 PWM generation unit
30 Motor current detecting unit
50 Switching unit
51 Field weakening determination unit
52 Rotational speed determination unit
53 Current determination unit
54 Execution unit
55 Detecting unit
61 Mask period generation unit
63 Mask period command unit
80 Motor (three-phase AC motor)
110 CPU
120 ROM
130 RAM
140: Hard disk drive
150: Communication unit
180: Bus

## Claims

1. An operation control system (10) comprising:
a field weakening determination unit (51) configured to determine whether a field weakening control is off for a three-phase AC motor (80); and
an execution unit (54) configured to perform a partial two-phase current control in a case where the field weakening control is determined to be off,
wherein
in sine wave voltage commands (vu*, vv*, vw*) correspond to individual phases generated based on a speed command for the three-phase AC motor (80), wherein a mask period is a predetermined angular range including an electrical angle at which the amplitude of the voltage commands becomes zero, and wherein the partial two-phase current control is a control to stop pulse generation during the mask period in a case where a pulse-width modulation signal is generated based on the voltage commands (vu*, vv*, vw*), and
**characterized in that**
the execution unit (54) stops the partial two-phase current control in a case where the field weakening control is determined to be on.

2. The operation control system (10) according to claim 1, further comprising:
a rotational speed determination unit (52) configured to determine whether a rotational speed of a compressor driven by the three-phase AC motor (80) is less than or equal to a predetermined value; and
a current determination unit (53) configured to determine whether a current value flowing through the three-phase AC motor (80) is less than or equal to a predetermined value,
wherein
the execution unit (54) performs the partial two-phase current control in a case where the field weakening control is determined to be off, the rotational speed is determined to be less than or equal to the predetermined value, and the current value is determined to be less than or equal to the predetermined value.

3. The operation control system (10) according to claim 2, wherein
the execution unit (54) stops the partial two-phase current control in a case where at least any one of the following is satisfied:
when the rotational speed is determined to be not less than or equal to the predetermined value; and
when the current value is determined to be not less than or equal to the predetermined value.

4. The operation control system (10) according to any one of claims 1 to 3, further comprising
a detecting unit (55) configured to detect a command to start the field weakening control while performing the partial two-phase current control, the execution unit (54) stops the partial two-phase current control in a case where the command to start the field weakening control is detected.

5. The operation control system (10) according to claim 4, wherein the detecting unit (55) is further configured to detect, while performing the partial two-phase current control, at least any one command of the following:
a command to change the rotational speed; and
a command to change the current value,
wherein
the execution unit (54) stops the partial two-phase current control in a case where the at least any one command is detected.

6. The operation control system (10) according to any one of claims 4 and 5, wherein
the command is at least any one of:
a command generated by internal processing of a device including the three-phase AC motor (80); and
a command input from outside the device including the three-phase AC motor (80).

7. An air conditioner comprising:
a compressor with a three-phase AC motor (80); and
the operation control system (10) according to any one of claims 1 to 6.

8. An operation control method comprising:
Determining (S101) whether a field weakening control is off for a three-phase AC motor (80); and
Performing (S105) a partial two-phase current control in a case where the field weakening control is determined to be off,
wherein
in sine wave voltage commands (vu*, vv*, vw*) correspond to individual phases generated based on a speed command for the three-phase AC motor (80), wherein a mask period is a predetermined angular range including an electrical angle at which the amplitude of the voltage commands becomes zero, and wherein the partial two-phase current control is a control to stop pulse generation during the mask period in a case where a pulse-width modulation signal is generated based on the voltage commands (vu*, vv*, vw*),
**characterized in that**
the performing (S105) stops the partial two-phase current control in a case where the field weakening control is determined to be on.

9. The operation control method according to claim 8, comprising:
Detecting (S201) a command to start the field weakening control, while performing the partial two-phase current control ; and
stopping (S203) the partial two-phase current control in a case where the command to start the field weakening control is detected.

10. The operation control method according to claim 9, comprising
Detecting (S201), while performing the partial two-phase current control, at least any one command on the following:
a command to change a rotational speed of a compressor driven by the three-phase AC motor (80); and
a command to change a current value flowing through the three-phase AC motor (80),
wherein
the stopping (S203) stops the partial two-phase current control in a case where the at least any one command is detected.

11. An operation control program configured to cause a computer to execute:
a step of determining whether a field weakening control is off for a three-phase AC motor (80); and
a step of performing a partial two-phase current control in a case where the field weakening control is determined to be off,
wherein
in sine wave voltage commands (vu*, vv*, vw*) correspond to individual phases generated based on a speed command for the three-phase AC motor, wherein a mask period is a predetermined angular range including an electrical angle at which the amplitude of the voltage commands becomes zero, and wherein the partial two-phase current control is a control to stop pulse generation during the mask period in a case where a pulse-width modulation signal is generated based on the voltage commands (vu*, vv*, vw*), and
**characterized in that**
the step of performing the partial two-phase current control is stopped in a case where the field weakening control is determined to be on.

12. The operation control program according to claim 11, configured to cause the computer to execute:
a step of detecting a command to start the field weakening control, while performing the partial two-phase current control; and
a step of stopping the partial two-phase current control in a case where the command to start the field weakening control is detected while performing the partial two-phase current control.

13. The operation control program according to claim 12, comprising the step of detecting, while performing the partial two-phase current control, at least any one command of the following:
a command to change a rotational speed of a compressor driven by the three-phase AC motor (80); and
a command to change a current value flowing through the three-phase AC motor (80),
wherein
the step of stopping stops the partial two-phase current control in a case where the at least any one command is detected.

## Patentansprüche

1. Betriebssteuerungssystem (10), umfassend:
eine Einheit (51) zum Bestimmen einer Feldschwächung, die dazu konfiguriert ist, zu bestimmen, ob eine Feldschwächungssteuerung für einen Drehstrommotor (80) ausgeschaltet ist; und
eine Ausführungseinheit (54), die dazu konfiguriert ist, eine unvollständige Zweiphasenstromsteuerung in einem Fall auszuführen, in dem bestimmt wird, dass die Feldschwächungssteuerung ausgeschaltet ist,
wobei
Sinusspannungsbefehlen (vu*, vv*, vw*) einzelnen Phasen entsprechen, die basierend auf einem Geschwindigkeitsbefehl für den Drehstrommotor (80) erzeugt werden, wobei eine Maskierungsperiode ein vorbestimmter Winkelbereich ist, der einen elektrischen Winkel umfasst, bei dem die Amplitude der Spannungsbefehle gleich null wird, und wobei die unvollständige Zweiphasenstromsteuerung eine Steuerung ist, um die Impulsgebung während der Maskierungsperiode in einem Fall zu unterbrechen, in dem ein Pulsweitenmodulationssignal basierend auf den Spannungsbefehlen (vu*, vv*, vw*) erzeugt wird, und
**dadurch gekennzeichnet, dass**
die Ausführungseinheit (54) die unvollständige Zweiphasenstromsteuerung in einem Fall unterbricht, bei dem bestimmt wird, dass die Feldschwächungssteuerung eingeschaltet ist.

2. Betriebssteuerungssystem (10) nach Anspruch 1, ferner umfassend:
eine Drehzahlbestimmungseinheit (52), die dazu konfiguriert ist, zu bestimmen, ob eine Drehzahl eines Kompressors, der von dem Drehstrommotor (80) angetrieben wird, kleiner oder gleich einem vorbestimmten Wert ist; und
eine Strombestimmungseinheit (53), die dazu konfiguriert ist, zu bestimmen, ob ein Stromwert, der durch den Drehstrommotor (80) fließt, kleiner oder gleich einem vorbestimmten Wert ist,
wobei
die Ausführungseinheit (54) die unvollständige Zweiphasenstromsteuerung in einem Fall ausführt, in dem bestimmt wird, dass die Feldschwächungssteuerung ausgeschaltet ist, wobei bestimmt wird, dass die Drehzahl kleiner oder gleich dem vorbestimmten Wert ist, und bestimmt wird, dass der Stromwert kleiner oder gleich dem vorbestimmten Wert ist.

3. Betriebssteuerungssystem (10) nach Anspruch 2, wobei
die Ausführungseinheit (54) die unvollständige Zweiphasenstromsteuerung in einem Fall unterbricht, in dem mindestens eine der folgenden Bedingungen erfüllt ist:
wenn bestimmt wird, dass die Drehzahl nicht kleiner oder gleich dem vorbestimmten Wert ist; und
wenn bestimmt wird, dass der Stromwert nicht kleiner oder gleich dem vorbestimmten Wert ist.

4. Betriebssteuerungssystem (10) nach einem der Ansprüche 1 bis 3, ferner umfassend
eine Detektionseinheit (55), die dazu konfiguriert ist, einen Befehl zu detektieren, die Feldschwächungssteuerung zu beginnen, während die unvollständige Zweiphasenstromsteuerung ausgeführt wird, wobei die Ausführungseinheit (54) die unvollständige Zweiphasenstromsteuerung in einem Fall unterbricht, in dem der Befehl zum Beginnen der Feldschwächungssteuerung detektiert wird.

5. Betriebssteuerungssystem (10) nach Anspruch 4, wobei die Detektionseinheit (55) ferner dazu konfiguriert ist, während der Ausführung der unvollständigen zweiphasigen Stromsteuerung mindestens einen der folgenden Befehle zu detektieren:
einen Befehl zum Abändern der Drehzahl; und
einen Befehl zum Abändern des Stromwertes,
wobei
die Ausführungseinheit (54) die unvollständige Zweiphasenstromsteuerung in einem Fall unterbricht, in dem der mindestens eine Befehl detektiert wird.

6. Betriebssteuerungssystem (10) nach einem der Ansprüche 4 und 5, wobei
der Befehl mindestens einer ist von:
einem Befehl, der durch eine interne Verarbeitung einer Vorrichtung, die den Drehstrommotor (80) umfasst, erzeugt wird; und
einem Befehl, der von außerhalb der Vorrichtung, die den Drehstrommotor (80) umfasst, eingegeben wird.

7. Klimaanlage, umfassend:
einen Kompressor mit einem Drehstrommotor (80); und
das Betriebssteuerungssystem (10) nach einem der Ansprüche 1 bis 6.

8. Betriebssteuerungsverfahren, umfassend:
Bestimmen (S101), ob eine Feldschwächungssteuerung für einen Drehstrommotor (80) ausgeschaltet ist; und
Ausführen (S105) einer unvollständigen zweiphasigen Stromsteuerung in einem Fall, in dem bestimmt wird, dass die Feldschwächungssteuerung ausgeschaltet ist,
wobei
Sinusspannungsbefehlen (vu*, vv*, vw*) individuellen Phasen entsprechen, die basierend auf einem Geschwindigkeitsbefehl für den Drehstrommotor (80) erzeugt werden, wobei eine Maskierungsperiode ein vorbestimmter Winkelbereich ist, der einen elektrischen Winkel umfasst, bei dem die Amplitude der Spannungsbefehle gleich null wird, und wobei die unvollständige Zweiphasenstromsteuerung eine Steuerung ist, um die Impulsgebung während der Maskierungsperiode in einem Fall zu unterbrechen, in dem ein Pulsbreitenmodulationssignal basierend auf den Spannungsbefehlen (vu*, vv*, vw*) erzeugt wird,
**dadurch gekennzeichnet, dass** das Ausführen (S105) die unvollständige Zweiphasenstromsteuerung in einem Fall unterbricht, in dem bestimmt wird, dass die Feldschwächungssteuerung eingeschaltet ist.

9. Betriebssteuerungsverfahren nach Anspruch 8, umfassend:
Detektieren (S201) eines Befehls, die Feldschwächungssteuerung zu beginnen, während die unvollständige Zweiphasenstromsteuerung ausgeführt wird; und
Unterbrechen (S203) der unvollständigen zweiphasigen Stromsteuerung in einem Fall, in dem der Befehl, die Feldschwächungssteuerung zu beginnen, detektiert wird.

10. Betriebssteuerungsverfahren nach Anspruch 9, umfassend
Detektieren (S201), während die unvollständige Zweiphasenstromsteuerung ausgeführt wird, mindestens eines der folgenden Befehle:
einem Befehl, eine Drehzahl eines Kompressors abzuändern, der von dem Drehstrommotor (80) angetrieben wird; und
einem Befehl, einen Stromwert, der durch den Drehstrommotor (80) fließt, abzuändern,
wobei
das Unterbrechen (S203 die unvollständige Zweiphasenstromsteuerung in einem Fall unterbricht, in dem der mindestens eine Befehl detektiert wird.

11. Betriebssteuerungsprogramm, das dazu konfiguriert ist, einen Computer zu veranlassen zur Ausführung von:
einem Schritt des Bestimmens, ob eine Feldschwächungssteuerung für einen Drehstrommotor (80) ausgeschaltet ist; und
einem Schritt des Ausführens einer unvollständigen zweiphasigen Stromsteuerung in einem Fall, in dem bestimmt wird, dass die Feldschwächungssteuerung ausgeschaltet ist,
wobei
Sinusspannungsbefehlen (vu*, vv*, vw*) individuellen Phasen entsprechen, die basierend auf einem Geschwindigkeitsbefehl für den Drehstrommotor erzeugt werden, wobei eine Maskierungsperiode ein vorbestimmter Winkelbereich ist, der einen elektrischen Winkel umfasst, bei dem die Amplitude der Spannungsbefehle gleich null wird, und wobei die unvollständige Zweiphasenstromsteuerung eine Steuerung ist, um die Impulsgebung während der Maskierungsperiode in einem Fall zu unterbrechen, in dem ein Pulsbreitenmodulationssignal basierend auf den Spannungsbefehlen (vu*, vv*, vw*) erzeugt wird, und
**dadurch gekennzeichnet, dass**
der Schritt des Ausführens der unvollständigen Zweiphasenstromsteuerung in einem Fall unterbrochen wird, in dem bestimmt wird, dass die Feldschwächungssteuerung eingeschaltet ist.

12. Betriebssteuerungsprogramm nach Anspruch 11, das dazu konfiguriert ist, den Computer zu veranlassen zur Ausführung von:
einem Schritt des Detektierens eines Befehls, die Feldschwächungssteuerung zu beginnen, während die unvollständige Zweiphasenstromsteuerung ausgeführt wird; und
einem Schritt des Unterbrechens der unvollständigen zweiphasigen Stromsteuerung in einem, in dem der Befehl, die Feldschwächungssteuerung zu beginnen, detektiert wird, während die unvollständige Zweiphasenstromsteuerung ausgeführt wird.

13. Betriebssteuerungsprogramm nach Anspruch 12, umfassend den Schritt des Detektierens, während die unvollständige Zweiphasenstromsteuerung ausgeführt wird, mindestens eines der folgenden Befehle:
einem Befehl, eine Drehzahl eines Kompressors, der von dem Drehstrommotor (80) angetrieben wird, abzuändern; und
einem Befehl, einen Stromwert, der durch den Drehstrommotor (80) fließt, abzuändern,
wobei
der Schritt des Unterbrechens die unvollständige Zweiphasenstromsteuerung in einem Fall unterbricht, in dem der mindestens eine Befehl detektiert wird.

## Revendications

1. Système de commande de fonctionnement (10) comprenant :
une unité de détermination d'affaiblissement de champ (51) configurée pour déterminer si une commande d'affaiblissement de champ est désactivée pour un moteur CA [courant alternatif] triphasé (80) ; et
une unité d'exécution (54) configurée pour effectuer une commande de courant biphasé partielle dans le cas où il est déterminé que la commande d'affaiblissement de champ est désactivée,
dans lequel
les consignes de tension sinusoïdale (vu*, vv*, vw*) correspondent à des phases individuelles générées sur la base d'une instruction de vitesse pour le moteur CA triphasé (80), dans lequel une période de masque est une plage angulaire prédéterminée comportant un angle électrique auquel l'amplitude des instructions de tension devient nulle, et dans lequel la commande de courant biphasé partielle est une commande visant à arrêter la génération d'impulsions pendant la période de masque dans le cas où un signal de modulation de largeur d'impulsion est généré sur la base des instructions de tension (vu*, vv*, vw*), et
**caractérisé en ce que**
l'unité d'exécution (54) arrête la commande de courant biphasé partielle dans le cas où il est déterminé que la commande d'affaiblissement de champ est activée.

2. Système de commande de fonctionnement (10) selon la revendication 1, comprenant en outre :
une unité de détermination de vitesse de rotation (52) configurée pour déterminer si une vitesse de rotation d'un compresseur entraîné par le moteur CA triphasé (80) est inférieure ou égale à une valeur prédéterminée ; et
une unité de détermination de courant (53) configurée pour déterminer si une valeur de courant circulant à travers le moteur CA triphasé (80) est inférieure ou égale à une valeur prédéterminée,
dans lequel
l'unité d'exécution (54) effectue la commande de courant biphasé partielle dans le cas où il est déterminé que la commande d'affaiblissement de champ est désactivée, que la vitesse de rotation est inférieure ou égale à la valeur prédéterminée, et que la valeur de courant est inférieure ou égale à la valeur prédéterminée.

3. Système de commande de fonctionnement (10) selon la revendication 2, dans lequel
l'unité d'exécution (54) arrête la commande de courant biphasé partielle dans le cas où au moins l'une des conditions suivantes est satisfaite :
lorsqu'il est déterminé que la vitesse de rotation n'est pas inférieure ou égale à la valeur prédéterminée ; et
lorsqu'il est déterminé que la valeur de courant n'est pas inférieure ou égale à la valeur prédéterminée.

4. Système de commande de fonctionnement (10) selon l'une quelconque des revendications 1 à 3, comprenant en outre
une unité de détection (55) configurée pour détecter une instruction pour démarrer la commande d'affaiblissement de champ tout en effectuant la commande de courant biphasé partielle, l'unité d'exécution (54) arrête la commande de courant biphasé partielle dans le cas où l'instruction pour démarrer la commande d'affaiblissement de champ est détectée.

5. Système de commande de fonctionnement (10) selon la revendication 4, dans lequel l'unité de détection (55) est en outre configurée pour, tout en effectuant la commande de courant biphasé partielle, détecter au moins l'une quelconque des instructions suivantes :
une instruction pour modifier la vitesse de rotation ; et
une instruction pour modifier la valeur de courant,
dans lequel
l'unité d'exécution (54) arrête la commande de courant biphasé partielle dans le cas où l'au moins une quelconque des instructions est détectée.

6. Système de commande de fonctionnement (10) selon l'une quelconque des revendications 4 et 5, dans lequel
l'instruction est au moins l'une des suivantes :
une instruction généré par un traitement interne d'un dispositif comportant le moteur CA triphasé (80) ; et
une instruction entrée depuis l'extérieur du dispositif comportant le moteur CA triphasé (80).

7. Climatiseur comprenant :
un compresseur équipé d'un moteur CA triphasé (80) ; et
le système de commande de fonctionnement (10) selon l'une quelconque des revendications 1 à 6.

8. Procédé de commande de fonctionnement comprenant les étapes suivantes :
déterminer (S101) si une commande d'affaiblissement de champ est désactivée pour un moteur CA triphasé (80) ; et
réaliser (S105) une commande de courant biphasé partielle dans le cas où il est déterminé que la commande d'affaiblissement de champ est désactivée,
dans lequel
les consignes de tension sinusoïdale (vu*, vv*, vw*) correspondent à des phases individuelles générées sur la base d'une instruction de vitesse pour le moteur CA triphasé (80), dans lequel une période de masque est une plage angulaire prédéterminée comportant un angle électrique auquel l'amplitude des instructions de tension devient nulle, et dans lequel la commande de courant biphasé partielle est une commande visant à arrêter la génération d'impulsions pendant la période de masque dans le cas où un signal de modulation de largeur d'impulsion est généré sur la base des instructions de tension (vu*, vv*, vw*),
**caractérisé en ce que**
l'étape de réalisation (S105) d'une commande de courant biphasé partielle arrête cette dernière dans le cas où il est déterminé que la commande d'affaiblissement de champ est activée.

9. Procédé de commande de fonctionnement selon la revendication 8, comprenant les étapes suivantes :
détecter (S201) une instruction pour démarrer la commande d'affaiblissement de champ tout en effectuant la commande de courant biphasé partielle ; et
arrêter (S203) la commande de courant biphasé partielle dans le cas où l'instruction pour démarrer la commande d'affaiblissement de champ est détectée.

10. Procédé de commande de fonctionnement selon la revendication 9, comprenant les étapes suivantes
tout en effectuant la commande de courant biphasé partielle, détecter (S201) au moins l'une quelconque des instructions suivantes :
une instruction pour modifier une vitesse de rotation d'un compresseur entraîné par le moteur CA triphasé (80) ; et
une instruction pour modifier une valeur de courant circulant à travers le moteur CA triphasé (80),
dans lequel
l'étape d'arrêt (S203) arrête la commande de courant biphasé partielle dans le cas où l'au moins une quelconque des instructions est détectée.

11. Programme de commande de fonctionnement configuré pour amener un ordinateur à exécuter :
une étape visant à déterminer si une commande d'affaiblissement de champ est désactivée pour un moteur CA triphasé (80) ; et
une étape visant à effectuer une commande de courant biphasé partielle dans le cas où il est déterminé que la commande d'affaiblissement de champ est désactivée,
dans lequel
les consignes de tension sinusoïdale (vu*, vv*, vw*) correspondent à des phases individuelles générées sur la base d'une instruction de vitesse pour le moteur CA triphasé, dans lequel une période de masque est une plage angulaire prédéterminée comportant un angle électrique auquel l'amplitude des instructions de tension devient nulle, et dans lequel la commande de courant biphasé partielle est une commande visant à arrêter la génération d'impulsions pendant la période de masque dans le cas où un signal de modulation de largeur d'impulsion est généré sur la base des instructions de tension (vu*, vv*, vw*), et
**caractérisé en ce que**
l'étape visant à effectuer la commande de courant biphasé partielle est arrêtée dans le cas où il est déterminé que la commande d'affaiblissement de champ est activée.

12. Programme de commande de fonctionnement selon la revendication 11, configuré pour amener l'ordinateur à exécuter :
une étape visant à détecter une instruction pour démarrer la commande d'affaiblissement de champ tout en effectuant la commande de courant biphasé partielle ; et
une étape visant à arrêter la commande de courant biphasé partielle dans le cas où l'instruction pour démarrer la commande d'affaiblissement de champ est détectée tout en effectuant la commande de courant biphasé partielle.

13. Programme de commande de fonctionnement selon la revendication 12, comprenant l'étape visant à, tout en effectuant la commande de courant biphasé partielle, détecter au moins l'une quelconque des instructions suivantes :
une instruction pour modifier une vitesse de rotation d'un compresseur entraîné par le moteur CA triphasé (80) ; et
une instruction pour modifier une valeur de courant circulant à travers le moteur CA triphasé (80),
dans lequel
l'étape d'arrêt arrête la commande de courant biphasé partielle dans le cas où l'au moins une quelconque des instructions est détectée.
